# EUROPÄISCHE PATENTANMELDUNG

(11) **EP 1 041 294 A2**
(43) Veröffentlichungstag der Anmeldung: **04.10.2000**
(21) Anmeldenummer: 00107210.7
(22) Anmeldetag: 27.03.2000
(51) Int. Cl.: F16B 7/04

(54) **Verbindungsanordnung**

(30) Priorität: 31.03.1999 DE 19914638
(71) Anmelder: Friatec Aktiengesellschaft, 68229 Mannheim (DE)
(72) Erfinder: Schweigert, Adolf, 88682 Salem (DE); Warkus, Clemens, 72116 Mössingen (DE)
(74) Vertreter: Schmitt, Meinrad, Dipl.-Ing.

(57) **Zusammenfassung**

Eine Verbindungsanordnung enthält ein erstes und ein zweites Profil (1, 2) sowie einen Profilverbinder (3) mit Halteklammern (4, 5), welche in Längsnuten (10, 11) des ersten Profils (1) eingreifen und welche im übrigen zumindest teilweise in einer Hohlkammer des zweiten Profils (2) angeordnet sind. Die Verbindungsanordnung soll dahingehend weitergebildet werden, daß mit geringem Aufwand eine funktionsgerechte und dauerhafte Verbindung der beiden Profile (1, 2) erreicht wird. Es wird vorgeschlagen, daß der Profilverbinder (3) einen im wesentlichen U-förmigen Querschnitt aufweist, die Halteklammern (4, 5) mittels eines Verbindungskörpers (6) innerhalb des zweiten Profils (2) miteinander verbunden sind und daß die Halteklammern (4, 5) zusammen mit den anliegenden Wänden des zweiten Profils (2) verpresst und / oder verspannt sind, wobei vor dem Verpressen und / oder Verspannen das zweite Profil (2) bezüglich des ersten Profils (1) zunächst vorläufig fixiert und ausrichtbar angeordnet ist.

## Beschreibung

Die Erfindung bezieht sich auf eine Verbindungsanordnung gemäß den im Oberbegriff des Patentanspruchs 1 angegebenen Merkmalen.

Aus der japanischen Patentanmeldung gemäß JP-A-08 004 724 ist eine derartige Verbindungsanordnung bekannt, deren Profilverbinder zwei seitlich angeordnete Haltekrallen sowie einen zentralen Y-förmigen Steg aufweist. Die genannten Haltekrallen greifen jeweils in Längsnuten eines ersten Profils ein, und der zentrale Steg liegt an der zwischen den Längsnuten befindlichen Außenwand des ersten Profils an. Der Profilverbinder ist teilweise im Inneren eines zweiten Profils angeordnet, welches im wesentlichen orthogonal mit dem ersten Profil verbindbar ist. Der zentrale Y-förmige Steg bedingt einen erheblichen Fertigungsaufwand des Profilverbinders, welcher als Formkörper gefertigt oder aus einzelnen Teilen zusammengesetzt werden muß. Nach dem Einführen des Profilverbinders in den Hohlraum des zweiten Profils ist dessen Ausrichtung zum ersten Profil festgelegt, und eine nachträgliche Veränderung der einmal eingenommenen Position ist nicht ohne weiteres durchführbar. Die beiden Profile weisen voneinander verschiedene Querschnitte auf, und es ist nicht ohne weiteres möglich, den Profilverbinder in einen Hohlraum des ersten Profils einzusetzen und mittels der Haltekrallen des Profilverbinders das zweite Profil zu verbinden, zumal letzteres keine Längsnuten aufweist.

Ferner ist aus der DE-A-44 06 208 eine Verbindungsanordnung mit einem Profilverbinder bekannt, dessen Haltekrallen in Längsnuten eines ersten Profils zur Herstellung einer kraft- und formschlüssigen Verbindung in Eingriff bringbar sind. Die Haltekrallen sind jeweils am Ende von Halteklammern angeordnet, welche von der Stirnseite her in einer Hohlkammer eines zweiten Profils einsetzbar sind. Die Halteklammern sind abgewinkelt ausgebildet und weisen aneinander liegende, gekrümmte Außenflächen auf, über welche sich die beiden Halteklammern gegeneinander abstützen. Mittels einer Schraube können die genannten Halteklammern gegeneinander derart verspannt werden, daß einerseits die Haltekrallen in die Nuten eingreifen und andererseits die jeweilige Halteklammer gegen die Innenfläche des zweiten Profils verspannt wird. Es müssen recht enge Fertigungstoleranzen eingehalten werden, wodurch ein erheblicher Fertigungsaufwand bedingt ist. Dies gilt sowohl für den Profilverbinder als auch für die beiden miteinander zu verbindenden Hohlkammerprofile, damit auch im ungünstigsten Falle, bei Addition sämtlicher Toleranzen sowohl des Profilverbinders als auch der Profile eine feste und dauerhafte Verbindung ermöglicht wird. Da ferner die beiden Halteklammern teilweise in einem Gehäuse angeordnet sind, ist ein zusätzlicher Aufwand für die Fertigung und die Montage des Profilverbinders erforderlich.

Hiervon ausgehend liegt der Erfindung die Aufgabe zugrunde, die Verbindungsanordnung der genannten Art dahingehend weiterzubilden, daß mit geringem Aufwand eine funktionsgerechte und dauerhafte Verbindung der Profile erreicht wird. Die Verbindungsanordnung soll eine einfache Handhabung bei der Montage ermöglichen, und eine hohe statische Belastbarkeit soll gewährleistet sein.

Die Lösung dieser Aufgabe erfolgt gemäß den Merkmalen des Patentanspruchs 1.

Die erfindungsgemäße Verbindungsanordnung ermöglicht bei einfacher Handhabung eine schnelle und problemlose Montage und gewährleistet eine funktionsgerechte Verbindung und eine hohe Belastbarkeit. Der Profilverbinder ist einteilig ausgebildet und insbesondere durch Ausstanzen aus einem Stahlblech und Verformen gefertigt. Der Profilverbinder ist im wesentlichen U-förmig ausgebildet, wobei die zueinander im wesentlichen parallelen Schenkel die Halteklammern bilden, welche über einen gemeinsamen Verbindungskörper direkt miteinander verbunden sind. Die an den freien Enden der genannten Schenkel bzw. Halteklammern angeordneten Haltekrallen greifen jeweils in die eine Nut des ersten Profils, während im übrigen die Halteklammern und der Verbindungskörper innerhalb des zweiten Profils angeordnet sind, welches als Hohlkammerprofil ausgebildet ist. Zweckmäßig sind beide Profile übereinstimmend als Hohlkammerprofile ausgebildet. Nachdem der Profilverbinder mit seinen Haltekrallen in die Längsnuten des ersten Profils eingesetzt und danach das zweite Profil mit seinem Ende über den Profilverbinder geschoben ist, ist eine vorläufige gegenseitige Positionierung der beiden Profile vorgegeben, welche jedoch ohne weiteres mit geringem Kraftaufwand den Erfordernissen entsprechend veränderbar ist. Erfindungsgemäß ist somit eine erste vorläufige Verbindung zwischen den beiden Profilen derart erreicht, daß diese gegeneinander verschoben und exakt in einer gewünschten Position justiert werden können. Nachfolgend wird das freie Ende des zweiten Profils im Bereich des Profilverbinders insbesondere plastisch durch vorgegebene äußere Kräfte verformt, wobei die Kräfte von außen auf die beiden diametralen Halteklammern in entgegengesetzter Richtung einwirken. Hierbei werden zum einen die Haltekrallen in die Längsnuten des ersten Profils dauerhaft eingepresst oder verspannt und zum anderen wird bevorzugt durch eine hinreichende Verformung des zweiten Profils im Bereich der Halteklammern eine kraft- und / oder formschlüssige Verbindung zwischen Profilverbinder und dem zweiten Profil hergestellt. Zum Verpressen des zweiten Profils mit den Halteklammern des Profilverbinders kann ein geeignetes Presswerkzeug, welches beispielsweise rein mechanisch nach Art einer Zange oder hydraulisch bzw. pneumatisch betätigbar ist, an den gegenüberliegenden Seiten des zweiten Profils im Bereich der Halteklammern des Profilverbinders angesetzt werden, um nachfolgend durch Einleitung der vorgegebenen Anpresskraft des zweiten Profils samt eingesetztem Profilverbinder zu verpressen.

Zusätzlich oder alternativ kann im Rahmen der Erfindung das Verpressen bzw. Verspannen des Profilverbinders mit und / oder in dem zweiten Profil durch Spannmittel, wie Schrauben oder Gewindebolzen oder dergleichen, erfolgen. So kann das zweite Profil im Bereich der Halteklammer des Profilverbinders ein Gewinde aufweisen, sei es direkt in der Profilwand oder in einer mit der Profilwand verbundenen Gewindehülse, wobei die Schraube mit ihrem freien Ende auf die zugeordnete Halteklammer des Profilverbinders einwirkt, um die genannte Einspannkraft aufzubringen. Die gegenüberliegende andere Halteklammer wird bei dieser einseitigen Aufbringung der Anpreßkraft an die Innenfläche der anliegenden Profilwand angepreßt, wobei die kraft- und/oder formschlüssige Verbindung hergestellt ist. In einer bevorzugten Weiterbildung sind diejenigen Flächen der Halteklammern, welche an den Innenflächen des zweiten Profils unter Vorspannung anliegen bzw. gegen diese verpreßt sind, mit einer Strukturierung versehen, um eine Verbesserung des Formschlusses zu erhalten. Diese Strukturierung kann insbesondere als eine Riffelung ausgebildet sein, welche in zweckmäßiger Weise quer zur Längsachse des Profilverbinders vorgesehen ist.

In einer besonderen Ausgestaltung der Erfindung enthält der Profilverbinder wenigstens einen Stützsteg, welcher auf der Außenfläche des ersten Profils im Bereich der Längsnut abgestützt ist. Die Längsnut, in welche die Haltekralle eingreift, ist in vorteilhafter Weise derart nach außen geneigt, daß die Haltekralle formschlüssig in die Längsnut eingespannt wird, wobei im Zusammenwirken mit dem Stützsteg eine stabile form- und / oder kraftschlüssige Verbindung des Profilverbinders und somit des zweiten Profils mit dem ersten Profil sicher gestellt ist. Diese Verbindung ist erfindungsgemäß derart vorgegeben, daß vor dem Verpressen und / oder Verspannen des Profilverbinders mit dem zweiten Profil, letzteres entlang dem ersten Profil verschoben werden kann, um die gewünschte exakte Justierung vorzunehmen. Nach dem insbesondere plastischen Verformen und / oder Verpressen oder dem Festspannen wird durch die Kombination des Stützsteges und der Haltekralle eine spielfreie Verbindung des zweiten Profils orthogonal zum ersten Profil sicher gestellt. Der Stützsteg und die Haltekralle sind ein im wesentlichen U-förmiges Verbindungselement und umgreifen die der genannten Längsnut benachbarte Längskante des ersten Profils. In vorteilhafter Weise ist zu beiden Seiten des Schenkels bzw. der Halteklammer des Profilverbinders jeweils ein Stützsteg vorgesehen. Im Rahmen der Erfindung kann ferner auch nur ein einziger Stützsteg im Bereich des Schenkels bzw. der Halteklammer vorgesehen sein. Ferner sind erfindungsgemäß die Haltekralle und / oder der bzw. die Stützstege derart nach innen abgewinkelt, daß sie innerhalb der durch die Außenfläche der Halteklammer liegenden Ebene sich befinden. Mit anderen Worten, weder die Halteklammer noch der oder die Stützstege stehen über die Außenfläche der Halteklammer nach außen vor, so daß eine spätere Beplankung eines Montage- oder Rahmensystems aus den genannten Profilen ohne weiteres möglich ist und insoweit keine Beeinträchtigung durch über die Außenfläche der Profile vorstehende Teile des Profilverbinders verursacht sind.

Weiterbildungen und besondere Ausgestaltungen der Erfindung sind in den Unteransprüchen sowie in der nachfolgenden Beschreibung eines Ausführungsbeispieles näher erläutert.

Die Erfindung wird anhand des in der Zeichnung dargestellten besonderen Ausführungsbeispiels näher erläutert, ohne daß insoweit eine Beschränkung erfolgt. Es zeigen:
- Fig. 1: eine perspektivische Darstellung der Verbindungsanordnung mit zwei Profilen, von welchen eines teilweise aufgeschnitten ist,
- Fig. 2: eine Aufsicht auf den Profilverbinder in Blickrichtung A gemäß Fig. 1,
- Fig. 3: eine Ansicht des Profilverbinders in Blickrichtung B gemäß Fig. 1.

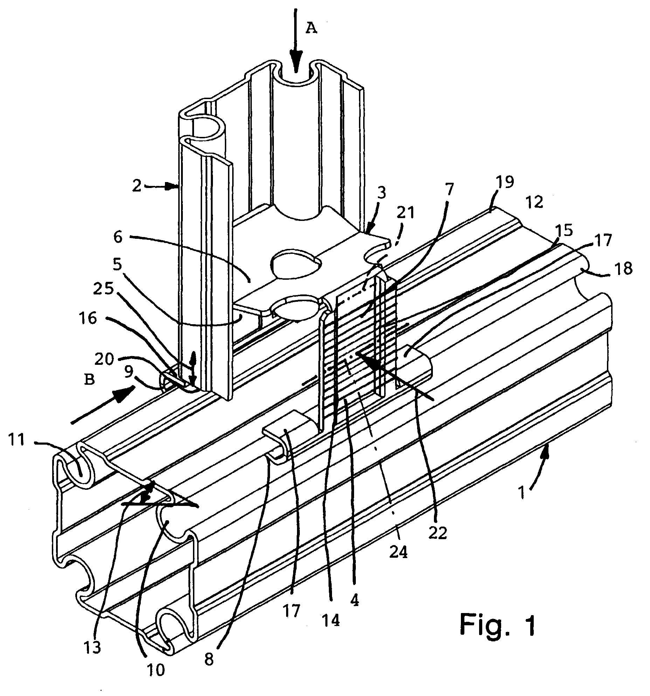

Fig. 1 zeigt in einer perspektivischen Darstellung die Verbindungsanordnung mit einem ersten Profil 1 und einem zweiten Profil 2, welches aus Gründen der Übersicht teilweise geschnitten ist, tatsächlich jedoch übereinstimmend wie das erste Profil 1 als Hohlkammerprofil ausgebildet ist. Das zweite Profil 2 umgreift mit seinem freien Ende größtenteils einen Profilverbinder 3, welcher einen im wesentlichen U-förmigen Querschnitt mit zwei im wesentlichen parallelen Schenkeln oder Halteklammern 4, 5 aufweist. Der Profilverbinder 3 besitzt einen gemeinsamen Verbindungskörper 6 für die beiden Halteklammern 4, 5, deren freie Enden Haltekrallen 8, 9 aufweisen. Die Außenkontur des Verbindungskörpers 6 entspricht im wesentlichen dem freien Querschnitt der inneren Hohlkammer des zweiten Profils 2 derart, daß der Verbindungskörper 6 in der dargestellten Weise in die Hohlkammer des zweiten Profils einschiebbar ist, und zwar zusammen mit den beiden Schenkeln oder Halteklammern 4, 5. Die Halteklammern 4, 5 sind an ihren Außenflächen, welche an den zugeordneten Innenflächen des zweiten Profils anliegen, in bevorzugter Weise mit einer Strukturierung zur Verbesserung des Formschlusses mit dem zweiten Profil 2 versehen. Die Strukturierung 7 ist in zweckmäßiger Weise als eine Riffelung quer zur Längsachse des Profilverbinders ausgebildet. Aufgrund der Strukturierung 7 und des hierdurch erreichten optimierten Formschlusses ist die Auszugskraft des Profilverbinders 3 aus dem zweiten Profil 2 wesentlich verbessert. Der Profilverbinder 3 ist einteilig ausgebildet und insbesondere durch Ausstanzen des Verbindungskörpers 6 mitsamt den Halteklammern 4, 5 und deren Haltekrallen 8, 9 aus einem Stahlblech und nachfolgendes Biegen gefertigt.

Das erste Profil 1 enthält wenigstens zwei hintergriffige Längsnuten 10, 11, in welche die gegeneinander gerichteten Haltekrallen 8, 9 in der dargestellten Weise eingreifen. Die Längsnuten 10, 11 sind seitlich eines Verbindungssteges 12 des ersten Profils 1 vorgesehen. Die Innenflächen der Längsnuten 10 sind in zweckmäßiger Weise zumindest teilweise zylindrisch ausgebildet. Wie ersichtlich, schließt im Bereich der Längskante die Innenfläche der Längsnut 10 mit der Außenfläche bzw. dem Steg 12 des ersten Profils einen spitzen Winkel 13 ein. Die Haltekralle 8 ist derart ausgebildet und auf die Innenfläche der Längsnut 10 und / oder den genannten Winkel 13 derart abgestimmt, daß eine kraft- und / oder formschlüssige Verbindung des Profilverbinders 3 mit dem ersten Profil 1 gewährleistet ist, und zwar in besonders vorteilhafter Weise mit wenigstens einem nachfolgend noch zu erläuternden Stützsteg, welcher auf der Außenfläche bzw. dem Steg 12 des ersten Profils im Bereich dessen Längskante aufliegt.

Das erste Profil 1, entsprechendes gilt für das zweite Profil 2, ist als Hohlkammerprofil mit im wesentlichen quadratischem Querschnitt ausgebildet, wobei im Bereich der vier Ecken jeweils eine Längsnut 10, 11 vorgesehen ist. Es sei an dieser Stelle festgehalten, daß die Profile 1, 2 auch andere Querschnitte im Rahmen der Erfindung aufweisen können und beispielsweise als Sechskant- oder Achtkantprofile ausgebildet sein können. Entscheidend sind die wenigstens zwei Längsnuten 10, 11 für die eingreifenden Haltekrallen 8, 9 des Profilverbinders 3, welcher im übrigen in die Hohlkammer des zweiten Profils 2 eingesetzt ist. Auch muß das erste Profil 1 mit den genannten Längsnuten 10, 11 nicht zwingend ein Hohlkammerprofil sein.

Die Halteklammer 4 enthält an ihren Längsseiten in zweckmäßiger Weise jeweils Versteifungsrippen 14, 15, welche durch Prägen hergestellt sind und im übrigen aber die gleiche Wanddicke wie der mittlere Bereich der Halteklammer 4 bzw. des gesamten Profilverbinders aufweisen. Die am freien Ende der Halteklammer 4 vorgesehene Haltekralle 8 weist in Richtung der Längsachse des ersten Profils gemessen, eine wesentlich größere Breite auf als die Halteklammer 4. Zu beiden Seiten steht also die Haltekralle 8 über die Halteklammer 4 hinaus, wobei dort ferner Stützstege 16, 17 vorgesehen sind, welche auf der Außenfläche des ersten Profils bzw. dessen Steg 12 aufliegen. Es sind zweckmäßig zu beiden Seiten der Halteklammer 4 die beiden Stützstege 16, 17 angeordnet, doch genügt grundsätzlich auch nur ein einziger. Zusammen mit der durchgehenden Haltekralle 8 umklammern der oder die Stützstege 16, 17 die Längskante 18 des ersten Profils 1. In Längsrichtung des ersten Profils 1 betrachtet, weisen die Haltekralle 8 bzw. 9 und die Stützstege 16, 17 einen im wesentlichen U-förmigen Querschnitt auf. Da im Bereich der Längskante 18, 19 die Innenfläche der Längsnut 10 bzw. 11 in dem genannten Winkel 13 zur Außenfläche des ersten Profils bzw. des Stegs 12 angeordnet ist, ist eine spielfreie formschlüssige Verbindung mittels der Haltekralle 8 bzw. 9 und dem Stützsteg 16 bzw. 17 des Profilverbinders 3 in Längsrichtung des zweiten Profils 2 mit dem ersten Profil 1 gewährleistet. Die gegenüberliegende Halteklammer 5 ist entsprechend ausgebildet, und deren Stützstege 16 umklammern zusammen mit der Haltekralle 9 die andere Längskante 19 des ersten Profils 1. Die Stützstege 16, 17 der beiden gegenüberliegenden Halteklammern 4, 5 sind ebenso wie die Haltekrallen 8, 9 jeweils gegeneinander gerichtet. Die Haltekrallen 8 und 9 sowie die Stützstege 16, 17 sind ausgehend von der Außenfläche der Halteklammer 4 bzw. 5 jeweils nach innen gerichtet, stehen also nicht über die Außenfläche der jeweiligen Halteklammer 4 bzw. 5 oder gar den Außenflächen der miteinander verbundenen Profile 1, 2 vor. Im Falle einer Verkleidung oder Beplankung eines in der erfindungsgemäßen Weise aufgebauten Profilrahmensystems liegen erfindungsgemäß die Haltekrallen und die Stützstege ebenso wie die dazu gehörenden Halteklammern hinter der Rückseite der für die Verkleidung oder Beplankung vorgesehenen Platten oder dergleichen, so daß die Verkleidung oder Beplankung problemlos durchführbar ist.

Wie mittels gestrichelter Linie 21 angedeutet, ist im Abwicklungsbereich der Halteklammer 4 bezüglich des oberen Verbindungskörpers 6 eine Ausnehmung 21 vorgesehen. Diese Ausnehmung 21 ist zweckmäßig durchgehend durch die gesamte Wanddicke des Profilverbinders vorgesehen, wobei jedoch an den Seitenrändern in Verlängerung der seitlichen Verstärkungsrippen 14, 15 eine durchgehende Verbindung zwischen dem Verbindungskörper 6 und der Halteklammer 4 vorhanden ist.

Zur Herstellung der Verbindung werden zunächst die Haltekrallen 8, 9 mit den zugeordneten Längsnuten 10, 11 des ersten Profils 1 in Eingriff gebracht. Der Profilverbinder 3 kann in Richtung der Längsachse in die gewünschte Position verschoben werden. Nachfolgend wird das zweite Profil 2 mit seinem freien Ende über den Profilverbinder 3 geschoben, bis die Stirnkante 20 zumindest näherungsweise auf den Oberflächen der Stützstege 16, 17 aufsteht. In diesem Montagezustand ist eine Verschiebung und exakte Positionierung des Profilverbinders 3 zusammen mit dem zweiten Profil 2 bezüglich des ersten Profils 1 durchführbar. Zum Abschluß der Montage und endgültigen Herstellen der Verbindung erfolgt das Einpressen des Profilverbinders 3 in das zweite Profil 2 durch Einwirkung einer äußeren Kraft in Richtung des Pfeiles 22 auf die Außenfläche der hier nicht dargestellten Wand des zweiten Profils 2. Die entsprechende Gegenkraft wirkt außen auf das zweite Profil im Bereich der gegenüberliegenden Halteklammer 4 ein. Die Kraft gemäß Pfeil 22 und ebenso die genannten Gegenkraft werden in zweckmäßiger Weise etwa linienförmig entsprechend der strichpunktierten Linie 24 aufgebracht, so daß die beiden Halteklammern 4, 5 und ebenso die an diesen außen anliegenden Wandteile des zweiten Profils in zweckmäßiger Weise entlang einer Linie plastisch bleibend verformt werden. Zusätzlich oder alternativ kann entsprechend dem Pfeil 22 mittels Spannmittel, wie insbesondere eine Schraube, ein Festspannen des Profilverbinders in oder mit dem zweiten Profil 2 vorgesehen sein. Es sei ausdrücklich festgehalten, daß es sich hierbei nicht um eine Schraubverbindung handelt, welche eine mit der Schraube oder dergleichen korrespondierende Gewindebohrung oder dergleichen im Profilverbinder erfordern würde.

Erfindungsgemäß erfolgt eine kraft- und formschlüssige Verbindung durch Verpressen oder Verspannen der innenliegenden Halteklammern 4, 5 und der jeweils außen anliegenden und/oder zugeordneten Wandteile des zweiten Profils 2. Des weiteren werden bei dem erfindungsgemäßen Verpressen oder Verspannen die diametral angeordneten Haltekrallen 8, 9 des Profilverbinders 3 in die Längsnuten 10, 11 des ersten Profils eingepresst, so daß insgesamt eine dauerhafte, bevorzugt nicht lösbare Verbindung der beiden Profile 1 und 2 hergestellt ist.

Die vorgeschlagene Verbindungsanordnung ermöglicht in besonders vorteilhafter Weise einen Längen- oder Toleranzausgleich, wie es mit dem Doppelpfeil 25 angedeutet ist. Ist der Profilverbinder 3 vollständig in das zweite Profil 2 eingeschoben, wie in Fig. 1 dargestellt, so weist die Stirnkante 20 des zweiten Profils einen minimalen Abstand zum ersten Profil auf. Entsprechend dem Doppelpfeil 25 kann im Rahmen der Erfindung die Stirnkante 20 einen entsprechend vergrößerten Abstand zum ersten Profil 1 aufweisen. Somit können problemlos Längentoleranzen bzw. Abstandstoleranzen des zweiten Profils 2 zum ersten Profil 1 ausgeglichen werden.

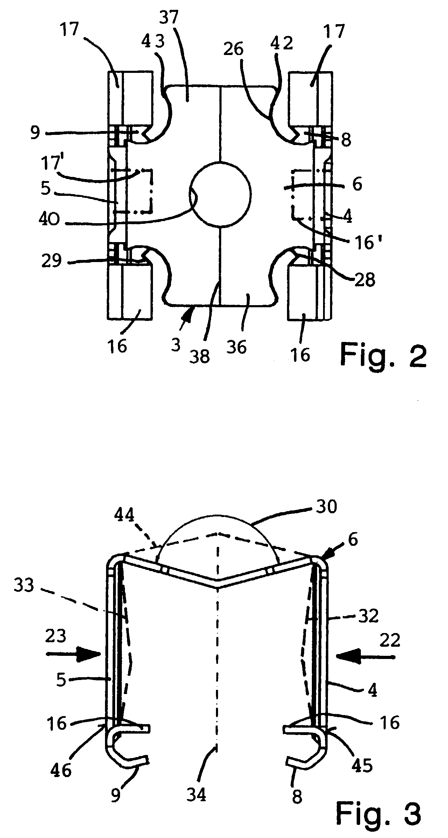

Fig. 2 zeigt eine Aufsicht auf den Profilverbinder 3 mit dem Verbindungskörper 6 und den beiden Halteklammer 4, 5. Wie bereits erläutert, entspricht die Außenkontur des Verbindungskörpers 6 im wesentlichen dem freien Querschnitt der Hohlkammer des zugeordneten Profils. Der Verbindungskörper liegt mit Armen 36, 37, welche zu den Halteklammern 4, 5 um 90° versetzt angeordnet sind, an der Innenwand des zweiten Profils an, so daß eine definierte und insbesondere spielfreie Arretierung des Profilverbinders 3 im zweiten Profil 2 sichergestellt ist. Der Verbindungskörper 6 besitzt in seinen vier Ecken jeweils eine Ausnehmung 26 entsprechend den vier Längsnuten des genannten Profils. Der Verbindungskörner 6 weist eine im wesentlichen sternförmige Außenkontur auf, welche zumindest näherungsweise der Innenkontur des zweiten Profils entspricht, in dessen Hohlkammer der Profilverbinder 3 und somit dessen Verbindungskörper 6 eingesetzt wird.

Die Haltekrallen 8, 9 besitzen an ihren gegenüberliegenden Längskanten Verzahnungen 28, 29, welche eine effektive form- und kraftschlüssige Verbindung in den Längsnuten des zugeordneten ersten Profils gewährleisten. Eine alternative und / oder zusätzliche Ausbildung der Stützstege 16' bzw. 17' ist mittels strichpunktierten Linien angedeutet. Diese Stützstege 16', 17' sind im Bereich der jeweiligen Halteklammer 4 bzw. 5 vorgesehen und sind im übrigen wie oben erläuterten Stützstege 16, 17 ausgebildet.

Der Verbindungskörper 6 enthält eine Soll-Biegestelle 38, welche in zweckmäßiger Weise im wesentlichen parallel zu den Halteklammern 4, 5 bzw. den Haltekrallen 8, 9 verläuft und durch welche eine reduzierte Steifigkeit vorgegeben ist. Beim Verpressen bzw. Verspannen kann somit eine definierte Deformation des Verbindungskörpers vorgegeben werden, um insbesondere die parallele Ausrichtung der Halteklammern 4, 5 sowie der Haltekrallen 8, 9 bezüglich den Innenwänden des zweiten Profils sicherzustellen. Der Verbindungskörper 6 enthält bevorzugt eine zentale Ausnehmung 40, und zwar im Bereich der Biegelinie 38. Die Steifigkeit des Verbindungskörpers 6 wird somit in definierter Weise reduziert, so daß beim Verpressen oder Verspannen des Profilverbinders die erfindungsgemäße Deformation des Verbindungskörpers 6 entlang der Biegelinie 38 definiert erfolgt. Da die Außenkontur des Verbindungskörpers 6 im wesentlichen im Querschnitt des Hohlraumes des zweiten Profils 2 entspricht, gelangen die Kanten 42, 43 der Arme 36, 37 beim Verpressen zur Anlage an die korrespondierenden Bereiche der Innenwand des zweiten Profils. Erfolgt beim Verpressen oder Verspannen ein Verbiegen des Verbindungskörpers 6, und zwar definiert gemäß der Biegelinie 38, so vergrößert sich der Anlagebereich der Kanten 42, 43 bzw. der Ausnehmungen 26 an der zugeordneten Innenfläche des zweiten Profils. Eine verbesserte Aussteifung wird hierdurch sichergestellt.

Fig. 3 zeigt eine seitliche Ansicht des U-förmig ausgebildeten Profilverbinders 3 mit den beiden zueinander im wesentlichen parallelen Schenkeln bzw. Halteklammern 4, 5, an deren freien Enden die Haltekrallen 8, 9 mit den beabstandet zu diesen angeordneten Stützstegen 16 vorgesehen sind. In besonders zweckmäßiger Weise ist der Verbindungskörper 6 in der Mitte unter einem vorgegebenen Winkel 30 abgewinkelt ausgebildet. Dieser Winkel 30 ist zweckmäßig bis 170°, vorzugsweise bis 160°, und insbesondere in der Größenordnung von 150° vorgegeben. Wie mit gestrichelter Linie 44 angedeutet, kann die Abwinkelung auch in der anderen Richtung, also weg von den Haltekrallen 8, 9, in entsprechender Weise vorgegeben werden. Wie aus den Zeichnungen ersichtlich, verlaufen die beiden Teilbereiche des Verbindungskörpers 6 in einem spitzen oder einem stumpfen Winkel zu den beiden Halteklammern 4, 5. Die Stützstege 16 sind hingegen orthogonal zur jeweiligen Halteklammer 4, 5 angeordnet. Die Haltekrallen 8, 9 und die Stützstege 16, 17 sind von den Seitenflächen 45, 46 der Halteklammern 4, 5 weg nach innen gerichtet und stehen erfindungsgemäß nicht nach außen jeweils über die Seitenflächen 45, 46 vor. Die Halteklammern 8, 9 sowie die Stützstege 16, 17 liegen somit innerhalb der durch die Seitenflächen 45, 46 vorgegebene Außenkontur des Profilverbinders 3 bzw. dessen Halteklammern 4, 5.

Beim oben erläuterten Verpressen oder Verspannen wirkt die genannte Kraft in Richtung des Pfeiles 22 auf die Halteklammer 4 und die Gegenkraft in Richtung des Pfeiles 23 auf die gegenüberliegende Halteklammer 5. Die genannte Kraft und ebenso die Gegenkraft wirken in zweckmäßiger Weise im wesentlichen in der Mitte der Längserstreckung der beiden Halteklammern 4, 5 auf diese ein. Mit gestrichelten Linien 32, 33 sind die plastisch deformierten Halteklammern 4, 5 nach dem erläuterten gemeinsamen Verpressen der anliegenden Wandbereiche des zweiten Profils angedeutet. Der erfindungsgemäße, im Querschnitt im wesentlichen U-förmig ausgebildete Profilverbinder 3 ist im wesentlichen spiegelsymmetrisch zur mittleren Symmetrieebene 34 ausgebildet.

### Bezugszeichen

- 1: erstes Profil
- 2: zweites Profil
- 3: Profilverbinder
- 4, 5: Schenkel / Halteklammer
- 6: Verbindungskörper
- 7: Strukturierung / Riffelung
- 8, 9: Haltekralle
- 10, 11: Längsnut
- 12: Steg
- 13: Winkel
- 14, 15: Versteifungsrippe
- 16, 17: Stützsteg
- 18, 19: Längskante von 1
- 20: Stirnkante von 2
- 21: Ausnehmung
- 22, 23: Pfeil
- 24: strichpunktierte Linie
- 25: Doppelpfeil
- 26: Ausnehmung
- 28, 29: Verzahnung
- 30: Winkel
- 32, 33: gestrichelte Linie
- 34: Symmetrieebene
- 36, 37: Arm
- 38: Linie / Biegestelle
- 40: Ausnehmung
- 42, 43: Kante
- 44: gestrichelte Linie
- 45, 46: Seitenfläche von 4, 5

## Patentansprüche

1. Verbindungsanordnung, enthaltend ein erstes und ein zweites Profil (1, 2) sowie einen Profilverbinder (3) mit Halteklammern (4, 5), welche in Längsnuten (10, 11) des ersten Profils (1) eingreifen und welche im übrigen zumindest teilweise in einer Hohlkammer des zweiten Profils (2) angeordnet sind,
dadurch gekennzeichnet, daß der Profilverbinder (3) einen im wesentlichen U-förmigen Querschnitt aufweist, daß die Halteklammern (4, 5) mittels eines Verbindungskörpers (6) innerhalb des zweiten Profils (2) miteinander verbunden sind und daß die Halteklammern (4, 5) zusammen mit den anliegenden Wänden des zweiten Profils (2) verpresst und / oder verspannt sind, wobei vor dem Verpressen und / oder Verspannen das zweite Profil (2) bezüglich des ersten Profils (1) zunächst vorläufig fixiert und ausrichtbar angeordnet ist.

2. Verbindungsanordnung nach Anspruch 1, dadurch gekennzeichnet, daß der Profilverbinder (3) einteilig, bevorzugt aus Stahlblech, ausgebildet ist und / oder einen im wesentlichen U-förmigen Querschnitt aufweist.

3. Verbindungsanordnung, insbesondere nach Anspruch 1 oder 2, dadurch gekennzeichnet, daß der Verbindungskörper (6) eine Außenkontur aufweist, welche zumindest näherungsweise dem freien Innenquerschnitt der Hohlkammer des zweiten Profils (2) entspricht, und / oder daß der Verbindungskörper (6) plattenförmig ausgebildet ist und / oder daß der Verbindungskörper (6) Kanten (42, 43) aufweist, welche an der Innenfläche des zweiten Profils (2) zur Anlage bringbar sind.

4. Verbindungsanordnung nach einem der Ansprüche 1 bis 3, dadurch gekennzeichnet, daß der Verbindungskörper (6), vorzugsweise in einer mittleren Symmetrieebene (34) in einem vorgegebenen Winkel (30) abgewinkelt ist, und / oder daß der genannte Winkel (30) bis 170°, vorzugsweise bis 160°, und insbesondere im wesentlichen mit 150° vorgegeben ist, wobei die derart gebildeten Teilbereiche des Verbindungskörpers (6) in einem spitzen oder stumpfen Winkel zu den anschließenden Halteklammern (4, 5) verlaufen.

5. Verbindungsanordnung nach einem der Ansprüche 1 bis 4, dadurch gekennzeichnet, daß die Halteklammern (4, 5) an ihren seitlichen Rändern Versteifungsrippen (14, 15) aufweisen.

6. Verbindungsanordnung nach einem der Ansprüche 1 bis 5, dadurch gekennzeichnet, daß die am freien Ende der jeweiligen Halteklammer (4, 5) vorgesehenen Haltekrallen (8, 9) zumindest an einer Seite über die Halteklammer (4, 5) vorstehen, und/ oder daß die Gesamtbreite der Haltekrallen (8, 9) größer ist als die Breite der Halteklammer (4, 5), und / oder daß die diametral angeordneten Haltekrallen (8, 9) der beiden Halteklammern (4, 5) an ihren freien gegeneinander gerichteten Enden Verzahnungen (28, 29) aufweisen.

7. Verbindungsanordnung, insbesondere nach einem der Ansprüche 1 bis 6, dadurch gekennzeichnet, daß die Halteklammern (4, 5) wenigstens einen Stützsteg (16, 17) aufweisen, welcher auf der Außenfläche und / oder dem Steg (12) des ersten Profils (1) zumindest näherungsweise aufliegen und / oder welche gegeneinander gerichtet sind, und/oder daß der Stützsteg (16, 17) und die zugeordnete Haltekralle (8, 9) einen im wesentlichen U-förmigen Querschnitt aufweisen.

8. Verbindungsanordnung nach einem der Ansprüche 1 bis 7, dadurch gekennzeichnet, daß die Halteklammern (4, 5) an ihren Oberflächen, welche den jeweiligen zugeordneten Innenflächen des zweiten Profils (2) zugewandt sind, eine Strukturierung (7) aufweisen, welche bevorzugt als eine Riffelung parallel zur Symmetrieebene (34) des Profilverbinders (3) ausgebildet ist.

9. Verbindungsanordnung nach einem der Ansprüche 1 bis 8, dadurch gekennzeichnet, daß der Verbindungskörper (6) eine Soll-Biegestelle enthält, welche im wesentlichen parallel zur Symmetrieebene (34) verläuft und / oder durch welche die Symmetrieebene (34) verläuft.

10. Verbindungsanordnung nach einem der Ansprüche 1 bis 9, dadurch gekennzeichnet, daß der Verbindungskörper (6) eine Ausnehmung (40) zur Reduzierung der Steifigkeit aufweist und / oder daß die Ausnehmung (40) im Bereich der Biegelinie (38) vorgesehen ist.
